# EUROPEAN PATENT APPLICATION

(11) **EP 4 503 780 A1**
(43) Date of publication of application: **05.02.2025**
(21) Application number: 22934045.0
(22) Date of filing: 29.03.2022
(51) Int. Cl.: H04W 64/00, H04W 4/40

(54) **PARAMETER CONFIGURATION METHOD AND APPARATUS, DEVICE, AND STORAGE MEDIUM**

(71) Applicant: Beijing Xiaomi Mobile Software Co., Ltd., Beijing 100085 (CN)
(72) Inventor: SHEN, Yang, Beijing 100085 (CN)
(74) Representative: Stöckeler, Ferdinand
(86) International application number: PCT/CN2022/083863
(87) International publication number: WO 2023/184190

(57) **Abstract**

The present application relates to the field of mobile communications. Disclosed are a parameter configuration method and apparatus, a device, and a storage medium. The method comprises: a terminal receiving first parameter information, which is sent by a network device and is used by the terminal to perform ranging or sidelink positioning, wherein the first parameter information is at least one of a plurality of pieces of second parameter information in a vehicle to everything (V2X) service, and/or the first parameter information is at least one of a plurality of pieces of third parameter information in a proximity-based service (ProSe). The terminal can determine the first parameter information for ranging or sidelink positioning, without the need for the network device to additionally send parameter information to the terminal. Therefore, there is no need to additionally transmit other parameters between the network device and the terminal, thus saving transmission resources.

## Description

### TECHNICAL FIELD

The disclosure relates to the field of mobile communications, and in particular to a method and an apparatus for parameter configuration, a device and a storage medium.

### BACKGROUND

**In** sidelink communication, there is a ranging function and a sidelink positioning function. The ranging function refers to that any terminal determines a distance between another terminal or determines a direction and/or relative positioning of a target terminal from another reference terminal. The sidelink positioning function refers to positioning of a terminal through a sidelink to determine a geographical location where the terminal is located. However, how to configure for a terminal, parameters for the ranging function and/or the sidelink positioning function is an urgent problem to be solved.

### SUMMARY

The embodiments of the disclosure provide a method and an apparatus for parameter configuration, a device and a storage medium. No additional transmission of other parameters is required between a network device and a terminal, which saves transmission resources. The technical solution is as follows:
According to an aspect of the disclosure, a method for parameter configuration is provided. The method is performed by a terminal, and the method includes:
receiving first parameter information from a network device, in which the first parameter information is used by the terminal to perform ranging or sidelink positioning, the first parameter information is at least one of a plurality of pieces of second parameter information in a vehicle to everything (V2X) service, and/or the first parameter information is at least one of a plurality of pieces of third parameter information in a proximity services (ProSe) service.

According to an aspect of the disclosure, a method for parameter configuration is provided. The method is performed by a network device, and the method includes:
sending first parameter information to a terminal, in which the first parameter information is used by the terminal to perform ranging or sidelink positioning, the first parameter information is at least one of a plurality of pieces of second parameter information in a V2X service, and/or the first parameter information is at least one of a plurality of pieces of third parameter information in a ProSe service.

According to an aspect of the disclosure, a method for parameter configuration is provided. The method is performed by a terminal, and the method includes:
sending request information to a policy control function (PCF), in which the request information indicates the PCF to send first parameter information, and the first parameter information is used by the terminal to perform ranging or sidelink positioning. The first parameter information is at least one of a plurality of pieces of second parameter information in a V2X service, and/or the first parameter information is at least one of a plurality of pieces of third parameter information in a ProSe service.

According to an aspect of the disclosure, a method for parameter configuration is provided. The method is performed by a network device, and the method includes:
receiving request information from a terminal, in which the request information indicates a PCF to send first parameter information, and the first parameter information is used by the terminal to perform ranging or sidelink positioning. The first parameter information is at least one of a plurality of pieces of second parameter information in a V2X service, and/or the first parameter information is at least one of a plurality of pieces of third parameter information in a ProSe service.

According to an aspect of the disclosure, an apparatus for parameter configuration is provided, including a receiving module.

The receiving module is configured to receive first parameter information from a network device. The first parameter information is used by a terminal to perform ranging or sidelink positioning, the first parameter information is at least one of a plurality of pieces of second parameter information in a V2X service, and/or the first parameter information is at least one of a plurality of pieces of third parameter information in a ProSe service.

According to an aspect of the disclosure, an apparatus for parameter configuration is provided, including a sending module.

The sending module is configured to send first parameter information to a terminal. The first parameter information is used by the terminal to perform ranging or sidelink positioning, the first parameter information is at least one of a plurality of pieces of second parameter information in a V2X service, and/or the first parameter information is at least one of a plurality of pieces of third parameter information in a ProSe service.

According to an aspect of the disclosure, an apparatus for parameter configuration is provided, including a sending module.

The sending module is configured to send request information to a PCF. The request information indicates the PCF to send first parameter information, and the first parameter information is used by the terminal to perform ranging or sidelink positioning. The first parameter information is at least one of a plurality of pieces of second parameter information in a V2X service, and/or the first parameter information is at least one of a plurality of pieces of third parameter information in a ProSe service.

According to an aspect of the disclosure, an apparatus for parameter configuration is provided, including a receiving module.

The receiving module is configured to receive request information from a terminal. The request information indicates a PCF to send first parameter information, and the first parameter information is used by the terminal to perform ranging or sidelink positioning. The first parameter information is at least one of a plurality of pieces of second parameter information in a V2X service, and/or the first parameter information is at least one of a plurality of pieces of third parameter information in a ProSe service.

According to an aspect of the disclosure, a terminal is provided, including: a processor; a transceiver coupled to the processor; a memory for storing executable instructions of the processor; where the processor is configured to load and execute executable instructions to implement the method for parameter configuration according to the above aspect.

According to an aspect of the disclosure, a network device is provided, including: a processor; a transceiver coupled to the processor; and a memory for storing instructions executable by the processor. The processor is configured to load and execute the executable instructions to implement the method for parameter configuration according to the above aspect.

According to an aspect of the disclosure, a computer-readable storage medium is provided. The computer-readable storage medium has stored executable program codes, which when loaded and executed by a processor, implement the method for parameter configuration according to the above aspect.

According to an aspect of the disclosure, a chip is provided, including a programmable logic circuitry and/or program instructions for implementing the method for parameter configuration according to the above aspect when the chip is running on a terminal or a network device.

According to an aspect of the disclosure, a computer program product is provided. The computer program product is used for implementing the method for parameter configuration according to the above aspect when the computer program product is executed by a processor of a terminal or network device.

In the solution according to the embodiments of the disclosure, the first parameter information configured by the network device for the terminal and used for performing ranging or sidelink positioning is parameter information in the V2X/ProSe service. That is to say, the network device does not need to additionally send parameter information to the terminal, and the terminal may still determine the first parameter information for ranging or sidelink positioning. Therefore, there is no need to perform additional transmission of other parameters between the network device and the terminal, thus saving transmission resources.

### BRIEF DESCRIPTION OF THE DRAWINGS

To more clearly illustrate the technical solutions in the embodiments of the disclosure, a brief description will be given below for the drawings which need to be used in the description of the embodiments. Obviously, the drawings in the description below are only some embodiments of the disclosure, and a person skilled in the art would obtain other drawings according to these drawings without involving any inventive efforts.
FIG. 1 illustrates a block diagram of a communication system according to an exemplary embodiment of the disclosure.
FIG. 2 illustrates a flow chart of a method for parameter configuration according to an exemplary embodiment of the disclosure.
FIG. 3 illustrates a flow chart of another method for parameter configuration according to an exemplary embodiment of the disclosure.
FIG. 4 illustrates a flow chart of yet another method for parameter configuration according to an exemplary embodiment of the disclosure.
FIG. 5 illustrates a flow chart of a method for ranging or sidelink positioning according to an exemplary embodiment of the disclosure.
FIG. 6 illustrates a flow chart of a method for parameter configuration according to an exemplary embodiment of the disclosure.
FIG. 7 illustrates a flow chart of a method for parameter configuration according to an exemplary embodiment of the disclosure.
FIG. 8 illustrates a block diagram of an apparatus for parameter configuration according to an exemplary embodiment of the disclosure.
FIG. 9 illustrates a block diagram of another apparatus for parameter configuration according to an exemplary embodiment of the disclosure.
FIG. 10 illustrates a block diagram of an apparatus for parameter configuration according to an exemplary embodiment of the disclosure.
FIG. 11 illustrates a block diagram of another apparatus for parameter configuration according to an exemplary embodiment of the disclosure.
FIG. 12 illustrates a block diagram of an apparatus for parameter configuration according to an exemplary embodiment of the disclosure.
FIG. 13 illustrates a block diagram of an apparatus for parameter configuration according to an exemplary embodiment of the disclosure.
FIG. 14 illustrates a structural diagram of a communication device according to an exemplary embodiment of the disclosure.

### DETAILED DESCRIPTION

**In** order that the objects, aspects and advantages of the disclosure will become more apparent, embodiments of the disclosure will be described in detail referring to the accompanying drawings.

Reference will now be made in detail to the exemplary embodiments, examples of which are illustrated in the accompanying drawings. Where the following description refers to the accompanying drawings, like numbers in different drawings indicate the same or similar elements, unless otherwise indicated. The embodiments described in the following exemplary embodiments do not represent all embodiments consistent with the disclosure. Rather, they are merely examples of apparatuses and methods consistent with certain aspects of the disclosure as detailed in the appended claims.

The terminology used herein is used for the purpose of describing particular embodiments only and is not intended to be limiting of the disclosure. As used in the disclosure and the appended claims, the singular forms "a/an", "said", and "the" are intended to include the plural forms as well, unless the context clearly indicates otherwise. It should also be understood that the term "and/or" as used herein refers to and encompasses any and all possible combinations of one or more of the associated listed items.

It should be understood that, although the terms first, second, third, etc. may be used herein to describe various information, such information should not be limited to these terms. These terms are only used to distinguish the same type of information from each another. For example, first information may also be referred to as second information, and similarly, second information may also be referred to as first information, without departing from the scope of the disclosure. Depending on the context, for example, the word "if" as used herein may be interpreted as "when..." or "while..." or "in response to determining...".

The application scenarios of the disclosure are described hereinafter.

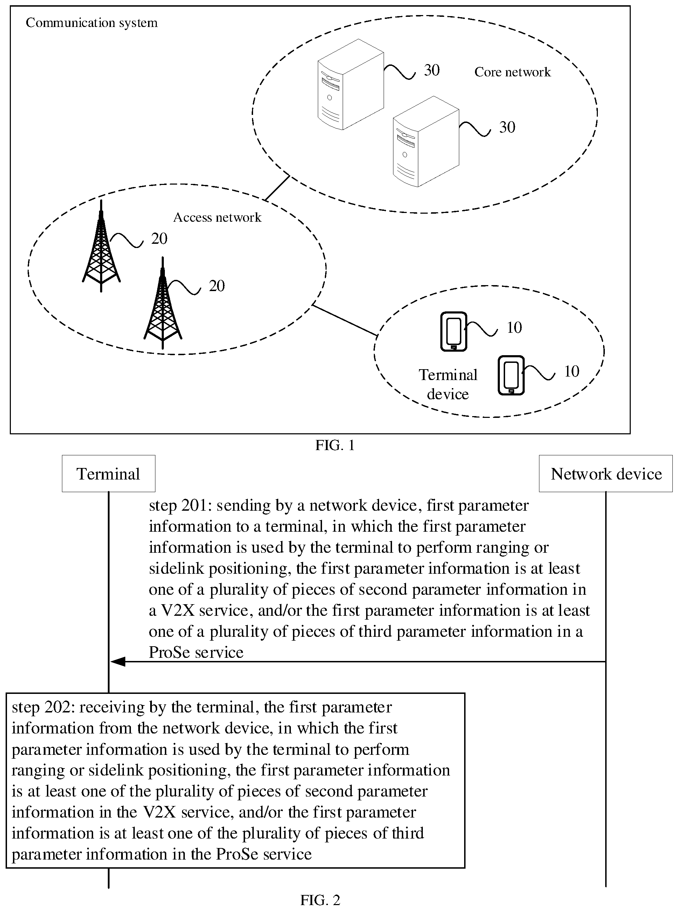

FIG. 1 illustrates a block diagram of a communication system according to an exemplary embodiment of the disclosure, which may include a terminal 10, an access network device 20 and a core network device 30.

There are a plurality of the terminals 10 in general, and one or more terminals 10 may be distributed within a cell managed by each access network device 20. The terminal 10 may include various handheld devices having wireless communication capabilities, on-board devices, wearable devices, computing devices or other processing devices connected to a wireless modem, as well as various forms of user equipment (UE), mobile station (MS), etc. For convenience of description, in the embodiments of the disclosure, the above-mentioned devices are collectively referred to as a terminal.

The access network device 20 is a device deployed in an access network to provide a wireless communication function for the terminal 10. For convenience of description, in the embodiments of the disclosure, the devices for providing the wireless communication function for the terminal 10 described above are collectively referred to as a network device. A connection may be established between the network device 20 and the terminal 10 over a radio interface to communicate over the connection, including interaction of signaling and data. There may be a plurality of the network devices 20, and two adjacent network devices 20 may communicate with each other in a wired or wireless manner. The terminal 10 may switch among the network devices 20, i.e., establish a connection with different network devices 20.

The network device 20 may include various forms of macro base stations, micro base stations, relay stations, access points, etc. In systems with different radio access technologies, the name of the device with network device functionality may be different, e.g., a gNodeB or gNB in 5G NR systems. The name of "network device" may vary as the evolution of the communication technologies.

The core network device 30 is a device deployed in a core network, and the functions of the core network device 30 are mainly to provide the UE with a connection, to manage the UE and to complete bearing a service, and to provide an interface for an external network as a bearer network. The core network device 30 includes various core network elements with various management functions. For example, the core network elements include an access and mobility management function (AMF) network element, a session management function (SMF) network element, a policy control function (PCF ) network element, a user plane function (UPF) network element, a network slice selection function (NSSF) network element, an authentication server function (AUSF) network element, a unified data management (UDM) network element, an application function (AF) network element, etc.

In some embodiments, the above-mentioned access network device and core network device are collectively referred to as a network device. That is to say, a terminal performs data interaction with the network device.

FIG. 2 illustrates a flow chart of a method for parameter configuration according to an exemplary embodiment of the disclosure. For example, the method is applicable to the terminal and the network device as illustrated in FIG. 1. The method including at least some of the following steps.

At 201, the network device sends first parameter information to the terminal. The first parameter information is used by the terminal to perform ranging or sidelink positioning. The first parameter information is at least one of a plurality of pieces of second parameter information in a V2X (Vehicle to X, vehicle to everything) service, and/or the first parameter information is at least one of a plurality of pieces of third parameter information in a ProSe (Proximity Services) service.

In the embodiments of the disclosure, the terminal has at least one of a ranging function or a sidelink positioning function. That is to say, the terminal may perform ranging, or the terminal may perform sidelink positioning, or the terminal may perform both ranging and sidelink positioning.

However, before the terminal performs ranging or sidelink positioning, the terminal needs for acquiring the first parameter information used for the terminal to perform ranging or sidelink positioning, and performs ranging or sidelink positioning according to the first parameter information. The network device sends the first parameter information to the terminal.

The ranging function refers to that any terminal determines a relative distance between another terminal or determines a direction and/or relative positioning of a target terminal from another reference terminal. The positioning function refers to positioning of a terminal to determine a geographical location where the terminal is located.

At 202, the terminal receives the first parameter information from the network device. The first parameter information is used by the terminal to perform ranging or sidelink positioning, the first parameter information is at least one of the plurality of pieces of second parameter information in the V2X service, and/or the first parameter information is at least one of the plurality of pieces of third parameter information in the ProSe service.

In addition, after the network device sends the first parameter information to the terminal, the terminal may receive the first parameter information from the network device and determine the first parameter information for performing ranging or sidelink positioning.

For example, the above-mentioned first parameter information includes three cases (1)-(3).
(1) The first parameter information belongs to at least one of the plurality of pieces of second parameter information in the V2X service.
(2) The first parameter information belongs to at least one of the plurality of pieces of third parameter information in the ProSe service.
(3) The first parameter information belongs to at least one of the plurality of pieces of second parameter information in the V2X service, and the first parameter information also belongs to at least one of the plurality of pieces of third parameter information in the ProSe service.

In embodiments of the disclosure, when the first parameter information belongs to at least one of the plurality of pieces of second parameter information in the V2X service and also belongs to at least one of the plurality of pieces of third parameter information in the ProSe service, the first parameter information is actually divided into two parts, one part of which is first parameter information corresponding to the second parameter information in the V2X service and the other part of which is first parameter information corresponding to the third parameter information in the ProSe service.

It should be noted that the embodiments of the disclosure are merely described by taking as an example that the first parameter information belongs to the at least one of the plurality of pieces of second parameter information in the V2X service and/or the first parameter information belongs to the at least one of the plurality of pieces of third parameter information in the ProSe service. In yet another embodiment, the first parameter information used by the terminal for ranging or sidelink positioning is shared with the second parameter information in the V2X service and/or the first parameter information is shared with the third parameter information in the ProSe service. In other words, the first parameter information used by the terminal to perform ranging or sidelink positioning is acquired from the second parameter information in the V2X service, and/or the first parameter information is acquired from the third parameter information in the ProSe service.

In some embodiments, the first parameter information sent by the network device actually belongs to the parameter information in the V2X service and/or the ProSe service, and if the terminal needs for acquiring the first parameter information from the V2X service and/or the ProSe service, the terminal needs to have a V2X capability and/or a ProSe capability.

In case that the terminal has the V2X capability, the terminal may determine the first parameter information from the second parameter information in the V2X service. In case that the terminal has the ProSe capability, the terminal may determine the first parameter information from the third parameter information in the ProSe service. That is to say, service types supported by the terminal include any one of the following three cases:
(1) The terminal has the V2X capability.
(2) The terminal has the ProSe capability.
(3) The terminal has both the V2X capability and the ProSe capability.

In embodiments of the disclosure, the terminal has the V2X capability and/or the ProSe capability, and the first parameter information may be further determined from parameter information in the V2X service and/or ProSe.

It should be noted that the steps performed by the network device may form a single embodiment, and the steps executed by the terminal may form a single embodiment, which is not limited by the disclosure.

In the solution according to the embodiments of the disclosure, the first parameter information configured by the network device for the terminal and used for performing ranging or sidelink positioning is parameter information in the V2X/ProSe service. That is to say, the network device does not need to additionally send parameter information to the terminal, and the terminal may still determine the first parameter information for ranging or sidelink positioning. Therefore, there is no need to perform additional transmission of other parameters between the network device and the terminal, thus saving transmission resources.

Based on the embodiment illustrated in FIG. 2, since the terminal may determine the first parameter information from the parameter information in the V2X service and the parameter information in the ProSe service, the second parameter information included in the V2X service and the third parameter information included in the ProSe service will be described below.

The second parameter information included in the V2X service includes at least one of the following items (1) to (7).

### (1) an authorization policy:

at least one public land mobile network (PLMN) in which the terminal is authorized to perform V2X communications over a PC5 (an interface) reference point when the terminal is "served by an evolved UMTS terrestrial radio access network (E-UTRA)" or "served by a New Radio (NR)"; and radio access technologies RAT(s) over which the terminal is authorized to perform V2X communications over the PCS reference point, for each of the above PLMNs.

When the terminal is "not served by the E-UTRA" and "not served by the NR", the authorization policy indicates whether the UE is authorized to perform V2X communications over the PCS reference point. The authorization policy also indicates RAT(s) over which the terminal is authorized to perform V2X communications over the PCS reference point.

(2) Radio parameters when the terminal is not served by NG-RAN (an interface between the gNB and the 5G CN-Radio Access Network).

The radio parameters include radio parameters per PCS RAT (i.e. LTE PC5, NR PCS) with Geographical Area(s) and an indication of whether they are "operator managed" or "non-operator managed".

The terminal uses the radio parameters to perform V2X communications over the PC5 reference point when "not served by the E-UTRA" and "not served by the NR" only if the terminal can reliably locate itself in the corresponding Geographical Area. Otherwise, the terminal is not authorized to transmit.

(3) Policy/parameters for PC5 RAT selection and for PC5 Tx Profile selection.

(4) Policy/parameters related to privacy.

The privacy refers to information having security guarantee for a terminal, which prevents information leakage.

The policy/parameters related to the privacy include:
1.1. The list of V2X service types for Geographical Area(s) that require privacy support.
1.2 A privacy timer value indicating the duration after which the terminal changes each source Layer-2 ID self-assigned by the terminal when privacy is required.

(5) Policy/parameters when a LTE PC5 is selected.

(6) Policy/parameters when a NR PC5 is selected.

The policy/parameters when NR PC5 is selected include at least one of:
1.1 The mapping of V2X service types to V2X frequencies with Geographical Area(s).
1.2 The mapping of V2X service types to the default mode of communication (i.e., broadcast mode, groupcast mode, or unicast mode).
1.3 The mapping of V2X service types to Destination Layer-2 ID(s) for broadcast.
1.4 The mapping of V2X service types to Destination Layer-2 ID(s) for groupcast mode communication.
1.5 The mapping of V2X service types to the default Destination Layer-2 ID(s) for initial signalling to establish unicast connection.

(7) A validity timer indicating the expiration time of the V2X policy/parameter.

The validity timer indicates the expiration time of the V2X policy/parameter, that is to say, the V2X policy/parameter is invalid if the validity timer expires.

The third parameter information included in the ProSe service includes two aspects of parameter information, the one aspect of which is third parameter information used for direct discovery, the other aspect of which is third parameter information used for direct communication.

The third parameter information used for ProSe direct discovery includes at least one of:

### (1) An authorization policy.

The authorization policy is described in two cases below:

In the first case, when the terminal is "served by NG-RAN", the authorization policy is open 5G ProSe Direct Discovery Model A monitoring authorization policy: PLMNs in which the terminal is authorized to perform 5G ProSe direct discovery monitoring.

Or, when the terminal is "served by NG-RAN", the authorization policy is open 5G ProSe Direct Discovery Model A monitoring authorization policy: PLMNs in which the UE is authorized to perform announcing .

In the second case, for restricted 5G ProSe direct discovery, the authorization policy includes:
restricted 5G ProSe direct discovery Model A monitoring authorization policy: PLMNs in which the terminal is authorized to perform restricted 5G ProSe to Direct Discovery Model A monitoring.

Or, the restricted 5G ProSe Direct Discovery Model A announcing authorization policy: PLMNs in which the terminal is authorized to perform restricted 5G ProSe Direct Discovery Model A announcing.

Or, the restricted 5G ProSe Direct Discovery Model B Discoverer operation authorization policy: PLMNs in which the terminal is authorized to perform Model B Discoverer operation.

Or, the restricted 5G ProSe Direct Discovery Model B Discoveree operation authorization policy: PLMNs in which the terminal is authorized to perform Model B Discoveree operation.

(2) Parameters used for 5G ProSe Direct Discovery.

The mapping of ProSe services to Destination Layer-2 ID(s) for sending/receiving initial signalling of discovery messages.

In some embodiments, the ProSe services is represented using ProSe identifiers.

(3) Radio parameters when the terminal is not served by NG-RAN.

The radio parameters include radio parameters per NR PC5 with Geographical Area(s) and an indication of whether they are "operator managed" or "non-operator managed". The terminal uses the radio parameters to perform 5G ProSe Direct Discovery over PC5 reference point when "not served by NG-RAN" only if the terminal can reliably locate itself in the corresponding Geographical Area. Otherwise, the terminal is not authorized to transmit.

(4) Restricted ProSe Discovery Terminal ID for Restricted Direct Discovery.

(5) Group member discovery parameters.

The group member discovery parameters include at least one of:
1.1. Application Layer Group ID, identifying an application layer group or a discovery group to which the terminal belongs;
1.2. Layer-2 Group ID: Layer 2 ID for Application Layer Group ID;
1.3. User Information ID: for modle A, it corresponds to the Announcer Information parameter when the terminal is acting as an announcing terminal. For Model B, it corresponds to the Discoverer Information in Solicitation messages and the Discoveree Information in Response messages, when the terminal is acting as a discoverer or discoveree terminal respectively.

(6) Validity timer indicating the expiration time of the Policy/Parameter for 5G ProSe Direct Discovery.

The validity timer indicates the expiration time of the Policy/Parameter for 5G ProSe Direct Discovery, that is to say, the Policy/Parameter for 5G ProSe Direct Discovery is invalid if the validity timer expires.

The third parameter information used for ProSe Direct Communication includes at least one of:

### (1) An authorization policy:

PLMNs in which the terminal is authorized to perform 5G ProSe Direct Communications over the PC5 reference point when the terminal is "served by NG-RAN".

When the terminal is "not served by NG-RAN", the authorization policy indicates whether the terminal is authorized to perform 5G ProSe Direct Communication over the PC5 reference point.

(2) Groupcast mode 5G ProSe Direct Communication policy/parameters.

The groupcast mode 5G ProSe Direct Communication policy/parameters include:
1.1 For each application layer group supported, parameters that enable the terminal to perform Groupcast mode 5G ProSe Direct Communication when provided by PCF or provisioned in the ME or configured in the universal integrated circuit card (UICC).
1.2. Application Layer Group ID, identifying an application layer group to which a terminal belongs.
1.3. ProSe Layer-2 Group ID: Destination Layer-2 ID applicable only when the Application Layer Group ID is provided by the application layer.
1.4 ProSe group IP multicast address.
1.5 Indication whether the terminal uses IPv4 (Internet Protocol version 4) or IPv6 (Internet Protocol version 6).
1.6 For a specific group configured to operate using IPv4, an IPv4 address to be used by the terminal as a source address. If none is provisioned, the terminal obtains a link local address for the Group using Dynamic Configuration of IPv4 Link-Local Address.

(3) Radio parameters when the terminal is not served by NG-RAN.

The radio parameters include the radio parameters NR PC5 with Geographical Area(s) and an indication of whether they are "operator managed" or "non-operator managed". The terminal uses the radio parameters to perform ProSe Direct Communications over PC5 reference point when "not served by NG-RAN" only if the terminal can reliably locate itself in the corresponding Geographical Area. Otherwise, the terminal is not authorized to transmit.

(4) Policy/parameters related to privacy.

1.1. The list of ProSe service types with Geographical Area(s) that require privacy support.

1.2 A privacy timer value indicating the duration after which the terminal changes each source Layer-2 ID self-assigned by the terminal when privacy is required.

(5) Policy/parameters when NR PC5 is selected.

1.1 The mapping of ProSe services to radio frequencies with Geographical Area(s).

1.2 The mapping of ProSe services to Destination Layer-2 ID(s) for broadcast.

1.3 The mapping of ProSe services to Destination Layer-2 ID(s) for groupcast.

1.4 The mapping of ProSe services to default Destination Layer-2 ID(s) for initial signalling to establish unicast connection.

(6) Path selection policy.

(7) Validity timer indicating the expiration time of the policy/parameter for 5G ProSe Direct Communication.

The validity timer indicates the expiration time of the policy/parameter for 5G ProSe Direct Communication, that is to say, the policy/parameter for 5G ProSe Direct Communication is invalid if the validity timer expires.

Based on the embodiment illustrated in FIG. 2, the first parameter information includes at least one of:
(1) Dedicated parameter information for ranging or sidelink positioning.

The dedicated parameter information refers to parameter information dedicatedly used for ranging or sidelink positioning.

In some embodiments, the dedicated parameter information for ranging or sidelink positioning is a parameter obtained by extending through a V2X service or a ProSe service.

(2) Common parameter information for both the ranging or sidelink positioning and the V2X service.

(3) Common parameter information for both the ranging or sidelink positioning and the ProSeservice.

The common parameter information is not only applicable to the ranging or sidelink positioning, but also applicable to the V2X service or the ProSe service.

In some embodiments, direct discovery refers to that a terminal searches for another terminal via a sidelink, and for the direct discovery, the dedicated parameter information includes parameters used for the direct discovery;

for direct communication, the direct communication refers to that a terminal communicates with another terminal via a sidelink, and the dedicated parameter information includes at least one of:
(1) Policy/parameters for PC5 RAT selection and for PC5 Tx Profile selection;
(2) Policy/parameters related to privacy;
(3) Policy/parameters when a LTE PC5 is selected;
(4) Policy/parameters when a NR PC5; or
(5) an authorization policy for the ranging or sidelink positioning.

Optionally, when the terminal is served by NG-RAN or served by EUTRAN, the authorization policy for the ranging or sidelink positioning includes at least one of:
(1) For a terminal with a ranging/sidelink positioning capability, one or more PLMNs in which the terminal is authorized to perform ranging/sidelink positioning as a reference terminal or a target terminal.
(2) For a terminal with a ranging/sidelink positioning capability, one or more PLMNs in which the terminal is authorized to perform ranging/sidelink positioning for acquiring a relevant distance.
(3) For a terminal with a ranging/sidelink positioning capability, one or more PLMNs in which the terminal is authorized to perform ranging/sidelink positioning for acquiring a relevant direction.
(4) For a terminal with a ranging/sidelink positioning capability, one or more PLMNs in which the terminal is authorized to perform high accuracy ranging/sidelink positioning for acquiring a relevant distance.
(5) For a terminal with a ranging/sidelink positioning capability, one or more PLMNs in which the terminal is authorized to perform high accuracy ranging/sidelink positioning for acquiring a relevant direction.

It should be noted that for the PLMN in the embodiments of the disclosure, the difference between performing ranging/sidelink positioning and performing high accuracy ranging/sidelink positioning lies in that the accuracy of the acquired distance and direction is different. The accuracy when the PLMN performs high accuracy ranging/sidelink positioning is higher than that when the PLMN performs ranging/sidelink positioning.

For example, the accuracy of the distance obtained by the PLMN performing high accuracy ranging/sidelink positioning is 5 meters, while the accuracy of the distance obtained by the PLMN performing ranging/sidelink positioning is 15 meters. That is to say, the accuracy of the distance obtained by the PLMN performing high accuracy ranging/sidelink positioning is higher than the accuracy of the distance obtained by the PLMN performing ranging/sidelink positioning. For another example, the accuracy of the direction obtained by the PLMN performing high accuracy ranging/sidelink positioning is 2 degrees, while the accuracy of the direction obtained by the PLMN performing ranging/sidelink positioning is 3 degrees. That is to say, the accuracy of the direction obtained by the PLMN performing high accuracy ranging/sidelink positioning is higher than the accuracy of the direction obtained by the PLMN performing ranging/sidelink positioning.

Optionally, when the terminal is not served by NG-RAN and not served by EUTRAN, the authorization policy for the ranging or sidelink positioning includes at least one of the following items (1) to (5).
(1) For a terminal with a ranging/sidelink positioning capability, whether the terminal is authorized to perform ranging/sidelink positioning as a reference terminal or a target terminal.

In some embodiments, the authorization policy includes 1 bit to indicate whether the terminal is authorized to perform ranging/sidelink positioning as the reference or target terminal.

For example, if the 1 bit included in the authorization policy includes is equal to 0, it is indicated that the terminal is not authorized to perform ranging/sidelink positioning as the reference terminal or target terminal. If the 1 bit included in the authorization policy includes is equal to 1, it is indicated that the terminal is authorized to perform ranging/sidelink positioning as the reference terminal or target terminal.

(2) For a terminal with a ranging/sidelink positioning capability, whether the terminal is authorized to perform ranging/sidelink positioning for acquiring a relevant distance.

(3) For a terminal with a ranging/sidelink positioning capability, whether the terminal is authorized to perform ranging/sidelink positioning for acquiring a relevant direction.

(4) For a terminal with a ranging/sidelink positioning capability, whether the terminal is authorized to perform high accuracy ranging/sidelink positioning for acquiring a relevant distance.

(5) For a terminal with a ranging/sidelink positioning capability, whether the terminal is authorized to perform high accuracy ranging/sidelink positioning for acquiring a relevant direction.

It should be noted that for the PLMN in the embodiments of the disclosure, the difference between performing ranging/sidelink positioning and performing high accuracy ranging/sidelink positioning lies in that the accuracy of the acquired distance and direction is different. The accuracy when the PLMN performs high accuracy ranging/sidelink positioning with is higher than that when the PLMN performs ranging/sidelink positioning.

For example, the accuracy of the distance obtained by the PLMN performing high accuracy ranging/sidelink positioning is 5 meters, while the accuracy of the distance obtained by the PLMN performing ranging/sidelink positioning is 15 meters. That is to say, the accuracy of the distance obtained by the PLMN performing high accuracy ranging/sidelink positioning is higher than the accuracy of the distance obtained by the PLMN performing ranging/sidelink positioning. For another example, the accuracy of the direction obtained by the PLMN performing high accuracy ranging/sidelink positioning is 2 degrees, while the accuracy of the direction obtained by the PLMN performing ranging/sidelink positioning is 3 degrees. That is to say, the accuracy of the direction obtained by the PLMN performing high accuracy ranging/sidelink positioning is higher than the accuracy of the direction obtained by the PLMN performing ranging/sidelink positioning.

The policy/parameters in these embodiments of the disclosure are similar to those in the above-mentioned embodiments, which will not be repeated herein.

In some embodiments, direct discovery refers to that the terminal searches for another terminal via a sidelink, and for the direct discovery, common parameter information includes at least one of:
(1) an authorization policy;
(2) radio parameters when the terminal is not served by a NG-RAN;
(3) a restricted ProSe discovery terminal ID for restricted direct discovery;
(4) group member discovery parameters; or
(5) a validity timer indicating an expiration time of the first parameter information.

The policy/parameters in these embodiments of the disclosure are similar to the parameter information of V2X or ProSe in the above-mentioned embodiments, which will not be repeated herein.

In some embodiments, the direct communication refers to that the terminal communicates with another terminal via a sidelink, and for the direct communication, the common parameter information includes at least one of:
(1) an authorization policy;
(2) groupcast mode 5G ProSe direct communication policy/parameters; or
(3) radio parameters when the terminal is not served by an E-UTRA or a NR.

The policy/parameters in these embodiments of the disclosure are similar to the parameter information of V2X or ProSe in the above-mentioned embodiments, which will not be repeated herein.

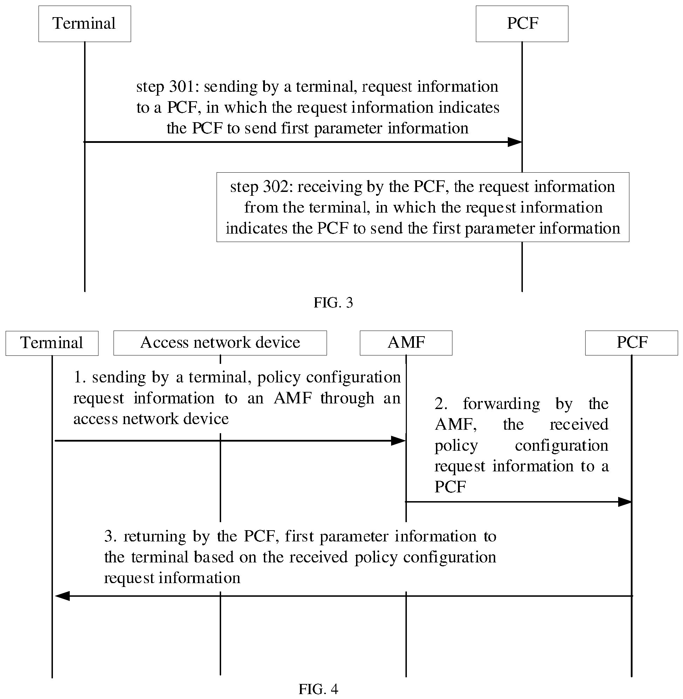

Based on the embodiment illustrated in FIG. 2, the network device is a PCF, and the terminal may send request information to the PCF to request for acquiring the first parameter information. Referring to FIG. 3, the method includes the following steps 301-302.

At 301 the terminal sends request information to the PCF. The request information indicates the PCF to send first parameter information.

At 302, the PCF receives the request information from the terminal. The request information indicates the PCF to send the first parameter information.

In the embodiments of the disclosure, the terminal actively requests the PCF for acquiring the first parameter information. For the PCF, after receiving the request information, the PCF may send the first parameter information to the terminal.

In some embodiments, in case that the terminal supports different services, the terminal may acquire the first parameter information by sending different request information.

Optionally, in case that the terminal supports ranging or sidelink positioning for the V2X service, the request information is sent to the network device.

In the embodiments of the disclosure, in case that the terminal supports ranging or sidelink positioning for the V2X service, the terminal sends the request information so that the PCF may configure the first parameter information for the terminal.

Optionally, in case that the terminal supports ranging or sidelink positioning of a first service or a second service, the terminal sends the request information to the network device, in which the first service being of a different service type from the second service.

In the embodiments of the disclosure, in case that the terminal supports ranging or sidelink positioning of the first service or the second service, the terminal sends the request information, so that the PCF may configure the first parameter information for the terminal.

In some embodiments, the first service is a business service. The second service is a public safety service.

In some embodiments, the request information is policy configuration request information, or registration request information.

Optionally, the terminal requests for acquiring the first parameter information during a registration procedure. That is to say, the request information is registration request information.

For example, in case that the terminal supports ranging or sidelink positioning for the V2X service, the terminal sends not only a V2X policy request but also the registration request information for acquiring the first parameter information during the registration procedure, and thus the parameter information and the first parameter information for the V2X service may be acquired.

For example, when the terminal requests for acquiring the parameter information and the first parameter information for the V2X service, the acquired first parameter information includes at least one of the following items (1) to (7).

### (1) An authorization policy.

In some embodiments, the authorization policy is reused or shared with the authorization policy of the V2X service when the terminal supports the V2X service.

In other embodiments, when the terminal supports the V2X service and the ProSe service, the authorization policy of the V2X service is different from the authorization policy of the ProSe.

In other embodiments, the authorization policy may define parameters for ranging or sidelink positioning.

(2) Radio parameters when the terminal is not served by E-UTRA or not served by NR.

In some embodiments, the radio parameters are reused with the radio parameters of the V2X service when the terminal supports the V2X service.

In other embodiments, when the terminal supports the V2X service and the ProSe service, the radio parameters of the V2X service are different from the radio parameters of the ProSe.

(3) Policy/parameters for PC5 RAT selection and for PC5 Tx Profile selection.

In some embodiments, the policy/parameters for PC5 RAT selection and for PC5 Tx Profile selection are used in a policy for ranging or sidelink positioning.

In other embodiments, the policy/parameters for PC5 RAT selection and for PC5 Tx Profile selection may be served as a part of the V2X service, i.e., ranging or sidelink positioning is taken as a specific service type for the V2X service.

(4) Policy/parameters related to privacy.

In some embodiments, the policy/parameters related to the privacy are used in the policy for ranging or sidelink positioning.

In other embodiments, the policy/parameters related to the privacy may be served as a part of the V2X service, i.e., ranging or sidelink positioning is taken as a specific service type of the V2X service.

(5) Policy/parameters when LTE PC5 is selected.

In some embodiments, the policy/parameters when LTE PC5 is selected are used in the policy for ranging or sidelink positioning.

In other embodiments, the policy/parameters when LTE PC5 is selected may be served as a part of the V2X service, that is to say, ranging or sidelink positioning is taken as a specific service type for the V2X service.

(6) Policy/parameters when NR PC5 is selected.

In some embodiments, the policy/parameters when NR PC5 is selected are used in the policy for ranging or sidelink positioning.

In other embodiments, the policy/parameters when NR PC5 is selected may be served as a part of the V2X service, that is to say, ranging or sidelink positioning is taken as a specific service type for the V2X service.

(7) A validity timer indicating an expiration time of the first parameter information.

In some embodiments, the validity timer is reused with the validity timer of the V2X service when the terminal supports the V2X service.

In other embodiments, the validity timer for the V2X service is different from the validity timer for the ProSe service when the terminal supports both the V2X service and the ProSe service.

In addition, the first parameter information further includes an authorization policy for ranging or sidelink positioning.

Optionally, when the terminal is served by NG-RAN or by EUTRAN, the authorization policy for ranging or sidelink positioning includes at least one of:
(1) for a terminal with a ranging/sidelink positioning capability, one or more PLMNs in which the terminal is authorized to perform ranging/sidelink positioning as a reference or target terminal;
(2) for a terminal with a ranging/sidelink positioning capability, one or more PLMNs in which the terminal is authorized to perform ranging/sidelink positioning for acquiring a relevant distance;
(3) for a terminal with a ranging/sidelink positioning capability, one or more PLMNs in which the terminal is authorized to perform ranging/sidelink positioning for acquiring a relevant direction;
(4) for a terminal with a ranging/sidelink positioning capability, one or more PLMNs in which the terminal is authorized to perform high accuracy ranging/sidelink positioning for acquiring a relevant distance; or
(5) for a terminal with a ranging/sidelink positioning capability, one or more PLMNs in which the terminal is authorized to perform high accuracy ranging/sidelink positioning for acquiring a relevant direction.

Optionally, when the terminal is not served by NG-RAN and not served by EUTRAN, the authorization policy for ranging or sidelink positioning includes at least one of the following items (1) to (5).
(1) For a terminal with a ranging/sidelink positioning capability, whether the terminal is authorized to perform ranging/sidelink positioning as a reference terminal or a target terminal.

In some embodiments, the authorization policy includes 1 bit to indicate whether the terminal is authorized to perform ranging/sidelink positioning as the reference or target terminal.

For example, if the 1 bit included in the authorization policy includes is equal to 0, it is indicated that the terminal is not authorized to perform ranging/sidelink positioning as the reference terminal or target terminal. If the 1 bit included in the authorization policy includes is equal to 1, it is indicated that the terminal is authorized to perform ranging/sidelink positioning as the reference terminal or target terminal.

(2) For a terminal with a ranging/sidelink positioning capability, whether the terminal is authorized to perform ranging/sidelink positioning for acquiring a relevant distance.

(3) For a terminal with a ranging/sidelink positioning capability, whether the terminal is authorized to perform ranging/sidelink positioning for acquiring a relevant direction.

(4) For a terminal with a ranging/sidelink positioning capability, whether the terminal is authorized to perform high accuracy ranging/sidelink positioning for acquiring a relevant distance.

(5) For a terminal with a ranging/sidelink positioning capability, whether the terminal is authorized to perform high accuracy ranging/sidelink positioning for acquiring a relevant direction.

For example, in case that the terminal supports ranging or sidelink positioning of the ProSe service, the terminal sends not only a ProSe policy request but also registration request information for acquiring the first parameter information during the registration procedure, and thus the parameter information and the first parameter information for the ProSe service may be acquired.

For example, for direct discovery, the first parameter information for the terminal supporting the ProSe service includes at least one of the following items (1) to (6).

### (1) An authorization policy.

In some embodiments, the authorization policy may be reused with a 5G ProSe service when used for business and public safety services.

In other embodiments, the authorization policy is different from that of the 5G ProSe service.

In other embodiments, the authorization policy may define specific parameters for ranging or sidelink positioning.

(2) Parameters used for direct discovery.

In some embodiments, the parameters used for direct discovery may be used in the policy for ranging or sidelink positioning.

In other embodiments, the parameters for direct discovery may be served as a part of the 5G ProSe service policy, i.e., ranging or sidelink positioning is taken as a specific service type in the 5G ProSe service.

(3) Radio parameters when the terminal is not served by NG-RAN.

In some embodiments, the radio parameters may be reused with the 5G ProSe service when used for business and public safety services.

In other embodiments, the radio parameters are different from those of the 5G ProSe.

(4) A restricted ProSe discovery terminal ID for restricted direct discovery.

In some embodiments, the terminal ID may be reused with the 5G ProSe service when used for business and public safety services.

In other embodiments, the terminal ID is different from that of the 5G ProSe service.

(5) Group member discovery parameters.

In some embodiments, the group member discovery parameter may be reused with the 5G ProSe service when used for business and public safety services.

In other embodiments, the group member discovery parameters are different from those of the 5G ProSe service.

(6) A validity timer indicating an expiration time of the first parameter information.

In some embodiments, the validity timer may be reused with the 5G ProSe when used for business and public safety services.

In other embodiments, the validity timer is different from that of the 5G ProSe service.

For example, for direct communication, the first parameter information for the terminal supporting the ProSe service includes at least one of the following items (1) to (7).

### (1) An authorization policy.

In some embodiments, the authorization policy may be reused with the 5G ProSe service when used for business and public safety services.

In other embodiments, when the terminal supports the V2X service and the ProSe service, the authorization policy of the V2X service is different from the authorization policy of the ProSe service.

In other embodiments, the authorization policy may define parameters for ranging or sidelink positioning.

(2) Groupcast mode 5G ProSe direct communication policy/parameters .

In some embodiments, the groupcast mode 5G ProSe direct communication policy/parameters may be reused with the 5G ProSe when used for business and public safety services.

In other embodiments, the groupcast mode 5G ProSe direct communication policy/parameters are different from the groupcast mode 5G ProSe direct communication policy/parameters of a 5G ProSe service.

(3) Radio parameters when the terminal is not served by E-UTRA or not served by NR.

In some embodiments, the radio parameters may be reused with the 5G ProSe service when used for business and public safety services.

In other embodiments, when the terminal supports the V2X service and the ProSe service, the radio parameters of the V2X service are different from the radio parameters of the ProSe service.

(4) Policy/parameters related to privacy.

(5) Policy/parameters when NR PC5 is selected.

(6) Path selection policy.

(7) A validity timer indicating an expiration time of the first parameter information.

In addition, the first parameter information further includes an authorization policy for ranging or sidelink positioning.

Optionally, when the terminal is served by NG-RAN or by EUTRAN, the authorization policy for ranging or sidelink positioning includes at least one of:
(1) for a terminal with a ranging/sidelink positioning capability, one or more PLMNs in which the terminal is authorized to perform ranging/sidelink positioning as a reference terminal or a target terminal;
(2) For a terminal with a ranging/sidelink positioning capability, one or more PLMNs in which the terminal is authorized to perform ranging/sidelink positioning for acquiring a relevant distance;
(3) for a terminal with a ranging/sidelink positioning capability, one or more PLMNs in which the terminal is authorized to perform ranging/sidelink positioning for acquiring a relevant direction;
(4) for a terminal with a ranging/sidelink positioning capability, one or more PLMNs in which the terminal is authorized to perform high accuracy ranging/sidelink positioning for acquiring a relevant distance; or
(5) for a terminal with a ranging/sidelink positioning capability, one or more PLMNs in which the terminal is authorized to perform high accuracy ranging/sidelink positioning for acquiring a relevant direction.

Optionally, when the terminal is not served by NG-RAN and not served by EUTRAN, the authorization policy for ranging or sidelink positioning includes at least one of the following items (1) to (5).
(1) For a terminal with a ranging/sidelink positioning capability, whether the terminal is authorized to perform ranging/sidelink positioning as a reference terminal or a target terminal.

In some embodiments, the authorization policy includes 1 bit to indicate whether the terminal is authorized to perform ranging/sidelink positioning as the reference or target terminal.

For example, if the 1 bit included in the authorization policy includes is equal to 0, it is indicated that the terminal is not authorized to perform ranging/sidelink positioning as the reference terminal or target terminal. If the 1 bit included in the authorization policy includes is equal to 1, it is indicated that the terminal is authorized to perform ranging/sidelink positioning as the reference terminal or target terminal.

(2) For a terminal with a ranging/sidelink positioning capability, whether the terminal is authorized to perform ranging/sidelink positioning for acquiring a relevant distance.

(3) For a terminal with a ranging/sidelink positioning capability, whether the terminal is authorized to perform ranging/sidelink positioning for acquiring a relevant direction.

(4) For a terminal with a ranging/sidelink positioning capability, whether the terminal is authorized to perform high accuracy ranging/sidelink positioning for acquiring a relevant distance.

(5) For a terminal with a ranging/sidelink positioning capability, whether the terminal is authorized to perform high accuracy ranging/sidelink positioning for acquiring a relevant direction.

Optionally, the terminal may send policy configuration request information to the PCF at any time, and acquire the first parameter information through the policy configuration request information.

For example, if the validity timer of the second parameter information for the V2X service expires, the terminal sends the policy configuration request information to the PCF. Or, in case that the terminal does not have the first parameter information, the terminal sends the policy configuration request information to the PCF.

For example, if the validity timer of the third parameter information for the ProSe service expires, the terminal sends the policy configuration request information to the PCF. Or, in case that the terminal does not have the first parameter information, the terminal sends the policy configuration request information to the PCF.

It should be noted that the embodiment of the disclosure only takes as an example that the PCF configures the first parameter information for the terminal. However, in another embodiment, when the PCF determines that the request information indicates different functions are supported by the terminal, the PCF determines parameter information to be sent to the terminal. The following describes how the PCF sends the parameter information to the terminal.

In the first situaiton, when the request information is configured to request first parameter information for ranging or sidelink positioning of the terminal and second parameter information for the V2X service, the PCF is configured to send, in response to the request message, the second parameter information for the V2X service and the first parameter information for ranging or sidelink positioning of the terminal.

In the embodiments of the disclosure, a request message sent by the terminal to the PCF is configured to request for acquiring the second parameter information for the V2X service and the first parameter information for ranging or sidelink positioning of the terminal, then the PCF may carry the first parameter information and the second parameter information in a returned message for the V2X service. It may also be understood that, when the PCF determines that the request information is configured to request the first parameter information for ranging or sidelink positioning of the terminal and the second parameter information for the V2X service, the PCF may include the first parameter information in the returned parameter information for the V2X service, so as to return the second parameter information and the first parameter information to the terminal at the same time.

In the second situation, when the request information is configured to request first parameter information for ranging or sidelink positioning of the terminal and the third parameter information for the ProSe service, the PCF is configured to send, in response to the request message, the third parameter information for the ProSe service and the first parameter information for ranging or sidelink positioning of the terminal.

In the embodiments of the disclosure, a request message sent by the terminal to the PCF is configured to request for acquiring the third parameter information for the ProSe service and the first parameter information for ranging or performing sidelink positioning of the terminal, then the PCF may carry the first parameter information and the third parameter information in a returned message for the ProSe service. It may also be understood that, when the PCF determines that the request information is configured to request the first parameter information for ranging or sidelink positioning of the terminal and the third parameter information for the ProSe service, the PCF may include the first parameter information in the returned parameter information for the ProSe service, so as to return the third parameter information and the first parameter information to the terminal at the same time.

In the third situation, when the request information is configured to request the first parameter information for ranging or sidelink positioning of the terminal, the second parameter information for the V2X service, and the third parameter information for the ProSe service, the PCF is configured to send, in response to the request message, the second parameter information for the V2X service, the third parameter information for the ProSe service, and the first parameter information for ranging or sidelink positioning of the terminal.

In the embodiments of the disclosure, a request message sent by the terminal to the PCF is configured to request for acquiring the second parameter information for the V2X service, the third parameter information for the ProSe service and the first parameter information for ranging or sidelink positioning of the terminal, then the PCF may carry the first parameter information and the second parameter information in the returned message for the V2X service, and carry the first parameter information and the third parameter information in the returned message for the ProSe service. It may also be understood that, when the PCF determines that the request information is configured to request the first parameter information for ranging or sidelink positioning of the terminal, the second parameter information for the V2X service and the third parameter information for the ProSe service, the PCF may include the first and second parameter information in the returned parameter information for the V2X service, may include the first and third parameter information in the returned parameter information for the ProSe service, so that the third parameter information and the first parameter information, the second parameter information and the first parameter information are simultaneously returned to the terminal.

It should be noted that the embodiments of the disclosure are only described by taking the request information as an example. In another embodiment, the request information may also be information received from a terminal policy container. That is to say, the terminal carries a request for acquring the parameter information in the terminal policy container, and sends the terminal policy container to the PCF. Then the PCF may determine the parameter information that the terminal requests for acquiring according to information in the received terminal policy container, and then returns the determined parameter information to the terminal.

Referring to FIG. 4, the process of the PCF configuring first parameter information for the terminal includes:
1. The terminal sends policy configuration request information to an AMF through an access network device.
2. The AMF forwards the received policy configuration request information to a PCF.
3. The PCF returns first parameter information to a terminal based on the received policy configuration request information.

According to the method in the embodiments of the disclosure, the terminal acquires first parameter information from the PCF via the request information, the terminal may determine the first parameter information for ranging or sidelink positioning, and the PCF does not need to additionally send the parameter information to the terminal. Therefore, there is no need to perform additional transmission of other parameters between the network device and the terminal, thus saving transmission resources.

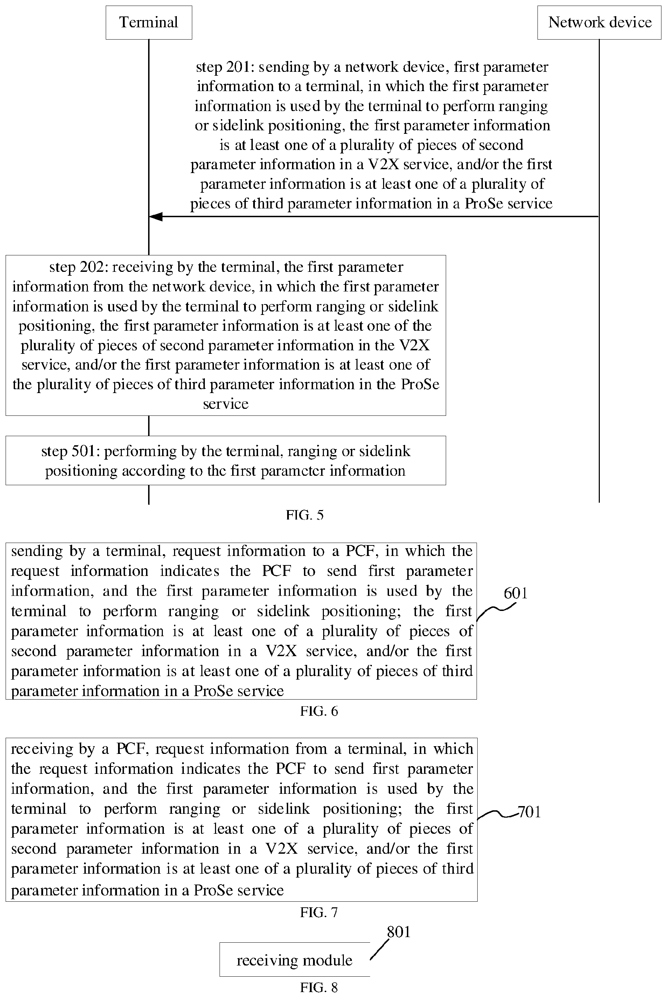

Based on the embodiment illustrated in FIG. 2, the terminal also performs ranging or sidelink positioning based on the acquired first parameter information. Referring to FIG. 5, the method includes the following step 501.

At 501, the terminal performs ranging or sidelink positioning according to the first parameter information.

In the embodiments of the disclosure, after the terminal receives the first parameter information from the network device, since the first parameter information is used by the terminal to perform ranging or sidelink positioning, ranging or sidelink positioning may be performed according to the first parameter information.

In the solutions according to the embodiments of the disclosure, the network device does not need to additionally send parameter information to the terminal, and the terminal may still determine the first parameter information for ranging or sidelink positioning. Therefore, there is no need to perform additional transmission of other parameters between the network device and the terminal, thus saving transmission resources.

FIG. 6 illustrates a flow chart of a method for parameter configuration according to an exemplary embodiment of the disclosure, which is applicable to the terminal as illustrated in FIG. 1, the method including at least some of the following contents.

At 601 the terminal sends request information to a PCF, in which the request information indicates the PCF to send first parameter information, and the first parameter information is used by the terminal to perform ranging or sidelink positioning. The first parameter information is at least one of a plurality of pieces of second parameter information in a V2X service, and/or the first parameter information is at least one of a plurality of pieces of third parameter information in a ProSe service.

In some embodiments, in case that the request information is configured to request the first parameter information for ranging or sidelink positioning of the terminal and the second parameter information for the V2X service, the PCF is configured to send, in response to the request message, the second parameter information for the V2X service and the first parameter information for ranging or sidelink positioning of the terminal.

In the embodiments of the disclosure, a request message sent by the terminal to the PCF is configured to request for acquiring the second parameter information for the V2X service and first parameter information for ranging or sidelink positioning of the terminal, then the PCF may carry the first parameter information and the second parameter information in a returned message for the V2X service.

In some embodiments, in case that the request information is configured to request the first parameter information for ranging or sidelink positioning of the terminal and the third parameter information for the ProSe service, the PCF is configured to send, in response to the request message, the third parameter information for the ProSe service and the first parameter information for ranging or sidelink positioning of the terminal.

In the embodiments of the disclosure, a request message sent by the terminal to the PCF is configured to request for acquiring the third parameter information for the ProSe service and the first parameter information for ranging or sidelink positioning of the terminal, then the PCF may carry the first parameter information and the third parameter information in a returned message for the ProSe service.

In some embodiments, in case that the request information is configured to request the first parameter information for ranging or sidelink positioning of the terminal, the second parameter information for the V2X service, and the third parameter information for the ProSe service, the PCF is configured to send, in response to the request message, the second parameter information for the V2X service, the third parameter information for the ProSe service, and the first parameter information for ranging or sidelink positioning of the terminal.

In the embodiments of the disclosure, a request message sent by the terminal to the PCF is configured to request for acquiring the second parameter information for the V2X service, the third parameter information for the ProSe service and the first parameter information for ranging or sidelink positioning of the terminal, then the PCF may carry the first parameter information and the second parameter information in the returned message for the V2X service, and carry the first parameter information and the third parameter information in the returned message for the ProSe service.

It should be noted that the embodiments of the disclosure are only described by taking the request information as an example. In another embodiment, the request information may also be information received from a terminal policy container. That is to say, the terminal carries a request for acquring the parameter information in the terminal policy container, and sends the terminal policy container to the PCF. Then the PCF may determine the parameter information that the terminal requests for acquiring according to information in the received terminal policy container, and then returns the determined parameter information to the terminal.

In the solutions according to the embodiments of the disclosure, the first parameter information configured by the network device for the terminal and used for performing ranging or sidelink positioning is parameter information in the V2X/ ProSe service. That is to say, the network device does not need to additionally send parameter information to the terminal, and the terminal may still determine the first parameter information for ranging or sidelink positioning. Therefore, there is no need to perform additional transmission of other parameters between the network device and the terminal, thus saving transmission resources.

FIG. 7 illustrates a flow chart of a method for parameter configuration according to an exemplary embodiment of the disclosure, which is applicable to the PCF as illustrated in FIG. 1, the method including at least some of the following contents.

At 701, the PCF receives request information from the terminal, in which the request information indicates the PCF to send first parameter information, and the first parameter information is used by the terminal to perform ranging or sidelink positioning. The first parameter information is at least one of a plurality of pieces of second parameter information in a V2X service, and/or the first parameter information is at least one of a plurality of pieces of third parameter information in a ProSe service.

In some embodiments, in case of determining that the request information is configured to request the first parameter information for ranging or sidelink positioning of the terminal and second parameter information for the V2X service, the PCF is configured to send, in response to the request message, the second parameter information for the V2X service and the first parameter information for ranging or sidelink positioning of the terminal.

When the PCF determines that the request information is configured to request the the first parameter information for ranging or sidelink positioning of the terminal and the second parameter information for the V2X service, the PCF may include the first parameter information in the returned parameter information for the V2X service, so as to return the second parameter information and the first parameter information to the terminal at the same time .

In some embodiments, in case of determining that the request information is configured to request the first parameter information for ranging or sidelink positioning of the terminal and the third parameter information for the ProSe service, the PCF is configured to send, in response to the request message, the third parameter information for the ProSe service and the first parameter information for ranging or sidelink positioning of the terminal.

When the PCF determines that the request information is configured to request the first parameter information for ranging or sidelink positioning of the terminal and the third parameter information for the ProSe service, the PCF may include the first parameter information in the returned parameter information of the ProSe service, so as to return the third parameter information and the first parameter information to the terminal at the same time .

In some embodiments, in case of determining that the request information is configured to request the first parameter information for ranging or sidelink positioning of the terminal, the second parameter information for the V2X service, and the third parameter information for the ProSe service, the PCF is configured to send, in response to the request message, the second parameter information for the V2X service, the third parameter information for the ProSe service, and the first parameter information for ranging or sidelink positioning of the terminal.

When the PCF determines that the request information is configured to request the first parameter information for ranging or sidelink positioning of the terminal, the second parameter information for the V2X service and the third parameter information for the ProSe service, the PCF may include the first and second parameter information in the returned parameter information for the V2X service and may include the first and third parameter information in the returned parameter information for the ProSe service, so that the third parameter information and the first parameter information, the second parameter information and the first parameter information are simultaneously returned to the terminal.

It should be noted that the embodiments of the disclosure are only described by taking the request information as an example. In another embodiment, the request information may also be information received from a terminal policy container. That is to say, the terminal carries a request for acquiring the parameter information in the terminal policy container, and sends the terminal policy container to the PCF. Then the PCF may determine the parameter information that the terminal requests for acquiring according to information in the received terminal policy container, and then returns the determined parameter information to the terminal.

In the solution according to the embodiments of the disclosure, the first parameter information configured by the network device for the terminal and used for performing ranging or sidelink positioning is parameter information in the V2X/ProSe service. That is to say, the network device does not need to additionally send parameter information to the terminal, and the terminal may still determine the first parameter information for ranging or sidelink positioning. Therefore, there is no need to perform additional transmission of other parameters between the network device and the terminal, thus saving transmission resources.

FIG. 8 illustrates a block diagram of an apparatus for parameter configuration according to an exemplary embodiment of the disclosure. Referring to FIG. 8, the apparatus includes a receiving module 801.

The receiving module 801 is configured to receive first parameter information from a network device. The first parameter information is used by a terminal to perform ranging or sidelink positioning. The first parameter information is at least one of a plurality of pieces of second parameter information in a V2X service, and/or the first parameter information is at least one of a plurality of pieces of third parameter information in a ProSe service.

In some embodiments, the terminal has a capability to perform ranging and/or sidelink positioning; and the terminal has a V2X capability and/or the terminal has a ProSe capability.

In some embodiments, the first parameter information includes at least one of:
dedicated parameter information for ranging or sidelink positioning;
common parameter information for both the ranging or sidelink positioning and the V2X service; or
common parameter information for both the ranging or sidelink positioning and the ProSe service.

In some embodiments, direct discovery refers to that the terminal searches for another terminal via a sidelink, and for the direct discovery, the dedicated parameter information includes parameters used for the direct discovery;
for direct communication, the direct communication refers to that the terminal communicates with another terminal via a sidelink, and the dedicated parameter information includes at least one of:
policy/parameters for PC5 RAT selection and for PC5 Tx Profile selection;
policy/parameters related to privacy;
policy/parameters when a LTE PC5 is selected;
policy/parameters when a NR PC5 is selected; or
an authorization policy for the ranging or sidelink positioning.

In some embodiments, the authorization policy for ranging or sidelink positioning when the terminal is served by NG-RAN or by EUTRAN includes at least one of:
for a terminal with a ranging/sidelink positioning capability, one or more PLMNs in which the terminal is authorized to perform ranging/sidelink positioning as a reference terminal or a target terminal;
for a terminal with a ranging/sidelink positioning capability, one or more PLMNs in which the terminal is authorized to perform ranging/sidelink positioning for acquiring a relevant distance;
for a terminal with a ranging/sidelink positioning capability, one or more PLMNs in which the terminal is authorized to perform ranging/sidelink positioning for acquiring a relevant direction;
for a terminal with a ranging/sidelink positioning capability, one or more PLMNs in which the terminal is authorized to perform high accuracy ranging/sidelink positioning for acquiring a relevant distance; or
for a terminal with ranging/sidelink positioning capability, one or more PLMNs in which the terminal is authorized to perform high accuracy ranging/sidelink positioning for acquiring a relevant direction.

In some embodiments, when the terminal is not served by NG-RAN and not served by EUTRAN, the authorization policy for ranging or sidelink positioning include at least one of:
for a terminal with a ranging/sidelink positioning capability, whether the terminal is authorized to perform ranging/sidelink positioning as a reference terminal or a target terminal;
for a terminal with a ranging/sidelink positioning capability, whether the terminal is authorized to perform ranging/sidelink positioning for acquiring a relevant distance;
for a terminal with a ranging/sidelink positioning capability, whether the terminal is authorized to perform ranging/sidelink positioning for acquiring a relevant direction;
for a terminal with a ranging/sidelink positioning capability, whether the terminal is authorized to perform high accuracy ranging/sidelink positioning for acquiring a relevant distance; or
for a terminal with a ranging/sidelink positioning capability, whether the terminal is authorized to perform high accuracy ranging/sidelink positioning for acquiring a relevant direction.

In some embodiments, direct discovery refers to that the terminal searches for another terminal via a sidelink, and for the direct discovery, the common parameter information includes at least one of:
an authorization policy;
radio parameters when the terminal is not served by a NG-RAN;
a restricted ProSe discovery terminal ID for restricted direct discovery;
group member discovered parameters; or
a validity timer indicating an expiration time of the first parameter information.

In some embodiments, the direct communication refers to that the terminal communicates with another terminal, and for the direct communication, the common parameter information includes at least one of:
an authorization policy;
groupcast mode 5G ProSe direct communication policy/parameters; or
radio parameters when the terminal is not served by an E-UTRA or not served by an NR.

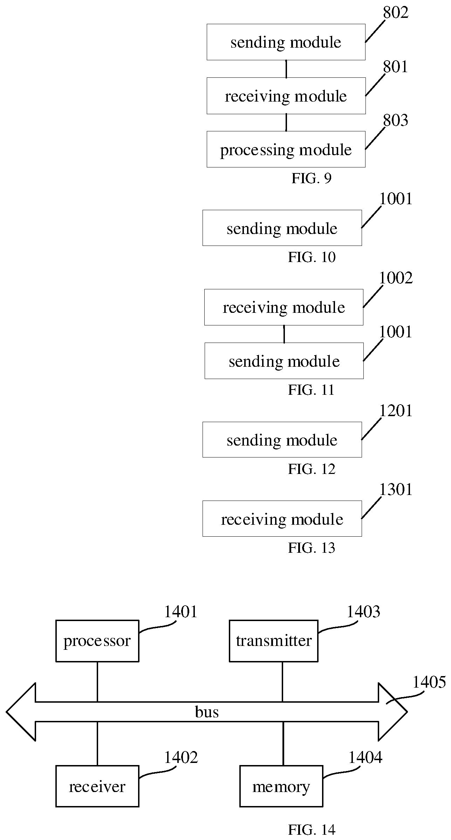

In some embodiments, the network device is a PCF. Referring to FIG. 9, the apparatus further includes a sending module 802. The sending module 802 is configured to send request information to the PCF. The request information indicates the PCF to send the first parameter information.

In some embodiments, the sending module 802 is further configured to: send the request information to the network device in case that the terminal supports ranging or sidelink positioning for the V2X service; or send the request information to the network device in case that the terminal supports the ranging or sidelink positioning for a first service or a second service, in which a service type of the first service is different from a service type of the second service.

In some embodiments, the request information is terminal policy request information, or registration request information.

In some embodiments, in case that the request information is configured to request the first parameter information for ranging or sidelink positioning of the terminal and the second parameter information for the V2X service, the PCF is configured to send, in response to the request message, the second parameter information for the V2X service and the first parameter information for ranging or sidelink positioning of the terminal.

In some embodiments, in case that the request information is configured to request the first parameter information for ranging or sidelink positioning of the terminal and the third parameter information for the ProSe service, the PCF is configured to send, in response to the request message, the third parameter information for the ProSe service and the first parameter information for ranging or sidelink positioning of the terminal.

In some embodiments, in case that the request information is configured to request the first parameter information for ranging or sidelink positioning of the terminal, the second parameter information for the V2X service, and the third parameter information for the ProSe service, the PCF is configured to send, in response to the request message, the second parameter information for the V2X service, the third parameter information for the ProSe service, and the first parameter information for ranging or sidelink positioning of the terminal.

In some embodiments, the request information is information received from a terminal policy container.

In some embodiments, referring to FIG. 9, the apparatus further includes: a processing module 803. The processing module 803 is configured to perform ranging or sidelink positioning according to the first parameter information.

It should be noted that the apparatus in the above-mentioned embodiments is merely exemplified by the division of the above-mentioned functional modules when realizing their functions. In practice, the above-mentioned function may be performed by different functional modules according to needs, i.e., the internal structure of the apparatus is divided into different functional modules to perform all or part of the functions described above. In addition, the above-mentioned apparatus according to the embodiments has the same concept as the method embodiments, and the implementation of the apparatus refer to the descriptions of the method embodiments, which will not be repeated here.

FIG. 10 illustrates a block diagram of an apparatus for parameter configuration according to an exemplary embodiment of the disclosure. Referring to FIG. 10, the apparatus includes a sending module 1001.

The sending module 1001 is configured to send first parameter information to a terminal. The first parameter information is used by the terminal to perform ranging or sidelink positioning, the first parameter information is at least one of s plurality of pieces of second parameter information in a V2X service, and/or the first parameter information is at least one of a plurality of pieces of third parameter information in s ProSe service.

In some embodiments, the terminal has a capability to perform ranging and/or sidelink positioning; the terminal has a V2X capability and/or the terminal has a ProSe capability.

In some embodiments, the first parameter information includes at least one of:
dedicated parameter information for ranging or sidelink positioning;
common parameter information for both the ranging or sidelink positioning and the V2X service; or
common parameter information for both the ranging or sidelink positioning and the ProSe service.

In some embodiments, direct discovery refers to that the terminal searches for another terminal via a sidelink, and for the direct discovery, the dedicated parameter information includes parameters used for the direct discovery;
for direct communication, the direct communication refers to that the terminal communicates with another terminal via a sidelink, and the dedicated parameter information includes at least one of:
policy/parameters for PC5 RAT selection and for PC5 Tx Profile selection;
policy/parameters related to privacy;
policy/parameters when LTE PC5 is selected;
policy/parameters when NR PC5 is selected; or
an authorization policy for the ranging or sidelink positioning.

In some embodiments, when the terminal is served by NG-RAN or by EUTRAN, the authorization policy for ranging or sidelink positioning includes at least one of:
for a terminal with a ranging/sidelink positioning capability, one or more PLMNs in which the terminal is authorized to perform ranging/sidelink positioning as a reference terminal or a target terminal;
for a terminal with a ranging/sidelink positioning capability, one or more PLMNs in which the terminal is authorized to perform ranging/sidelink positioning for acquiring a relevant distance;
for a terminal with a ranging/sidelink positioning capability, one or more PLMNs in which the terminal is authorized to perform ranging/sidelink positioning for acquiring a relevant direction;
for a terminal with a ranging/sidelink positioning capability, one or more PLMNs in which the terminal is authorized to perform high accuracy ranging/sidelink positioning for acquiring a relevant distance; or
for a terminal with ranging/sidelink positioning capability, one or more PLMNs in which the terminal is authorized to perform high accuracy ranging/sidelink positioning for acquiring a relevant direction.

In some embodiments, when the terminal is not served by NG-RAN and not served by EUTRAN, the authorization policy for ranging or sidelink positioning includes at least one of:
for a terminal with a ranging/sidelink positioning capability, whether the terminal is authorized to perform ranging/sidelink positioning as a reference terminal or a target terminal;
for a terminal with a ranging/sidelink positioning capability, whether the terminal is authorized to perform ranging/sidelink positioning for acquiring a relevant distance;
for a terminal with a ranging/sidelink positioning capability, whether the terminal is authorized to perform ranging/sidelink positioning for acquiring a relevant direction;
for a terminal with a ranging/sidelink positioning capability, whether the terminal is authorized to perform high accuracy ranging/sidelink positioning for acquiring a relevant distance; or
for a terminal with a ranging/sidelink positioning capability, whether the terminal is authorized to perform high accuracy ranging/sidelink positioning for acquiring a relevant direction.

In some embodiments, direct discovery refers to that the terminal searchs for another terminal via a sidelink, and for direct discovery, the common parameter information includes at least one of:
an authorization policy;
radio parameters when the terminal is not served by a NG-RAN;
a restricted ProSe discovery terminal ID for restricted direct discovery;
group member discovery parameters; or
a validity timer indicating an expiration time of the first parameter information.

In some embodiments, direct communication refers to that the terminal communicates with another terminal, and for the direct communication, the common parameter information includes at least one of:
an authorization policy;
groupcast mode 5G ProSe direct communication policy/parameters; or
radio parameters when the terminal is not served by an E-UTRA or not served by an NR.

In some embodiments, the network device is a PCF, and referring to FIG. 11, the apparatus further includes a receiving module 1002.

The receiving module 1002 is configured to receive, by the PCF, request information from the terminal. The request information indicates the PCF to send the first parameter information.

In some embodiments, the request information is sent in case that the terminal supports ranging or sidelink positioning for the V2X service; or the request information is sent in case that the terminal supports ranging or sidelink positioning for a first service or a second service. A service type of the first service is different from a service type of the second service.

In some embodiments, the request information is terminal policy request information, or registration request information.

In some embodiments, the sending module 1001 is further configured to:
in case of determining that the request information is configured to request the first parameter information for ranging or sidelink positioning of the terminal and the second parameter information for the V2X service, send, in response to the request message, the second parameter information for the V2X service and the first parameter information for ranging or sidelink positioning of the terminal.

In some embodiments, the sending module 1001 is further configured to:
in case of determining that the request information is configured to request the first parameter information for ranging or sidelink positioning of the terminal and the third parameter information for the ProSe service, send, in response to the request message, the third parameter information for the ProSe service and the first parameter information for ranging or sidelink positioning of the terminal.

In some embodiments, the sending module 1001 is further configured to:
in case of determining that the request information is configured to request the first parameter information for ranging or sidelink positioning of the terminal and the third parameter information for the ProSe service, send, in response to the request message, the third parameter information for the ProSe service and the first parameter information for ranging or sidelink positioning of the terminal.

In some embodiments, the sending module 1001 is further configured to:
in case of determining that the request information is configured to request the first parameter information for ranging or sidelink positioning of the terminal, the second parameter information for the V2X service, and the third parameter information for the ProSe service, send, in response to the request message, the second parameter information for the V2X service, the third parameter information for the ProSe service, and the first parameter information for ranging or sidelink positioning of the terminal.

In some embodiments, the request information is information received from a terminal policy container.

It should be noted that the apparatus in the above-mentioned embodiments is merely exemplified by the division of the above-mentioned functional modules when realizing their functions. In practice, the above-mentioned function may be performed by different functional modules according to needs, i.e., the internal structure of the apparatus is divided into different functional modules to perform all or part of the functions described above. In addition, the above-mentioned apparatus according to the embodiments has the same concept as the method embodiments, and the implementation of the apparatus refer to the descriptions of the method embodiments, which will not be repeated here.

FIG. 12 illustrates a block diagram of an apparatus for parameter configuration according to an exemplary embodiment of the disclosure. Referring to FIG. 12, the apparatus includes a sending module 1201.

The sending module 1201 is configured to send request information to a PCF. The request information indicates the PCF to send first parameter information, and the first parameter information is used by the terminal to perform ranging or sidelink positioning. The first parameter information is at least one of a plurality of pieces of second parameter information in a V2X service, and/or the first parameter information is at least one of a plurality of pieces of third parameter information in a ProSe service.

In some embodiments, in case that the request information is configured to request the first parameter information for ranging or sidelink positioning of the terminal and the second parameter information for the V2X service, the PCF is configured to send, in response to the request message, the second parameter information for the V2X service and the first parameter information for ranging or sidelink positioning of the terminal.

In some embodiments, in case that the request information is configured to request the first parameter information for ranging or sidelink positioning of the terminal and the third parameter information for the ProSe service, the PCF is configured to send, in response to the request message, the third parameter information for the ProSe service and the first parameter information for ranging or sidelink positioning of the terminal.

In some embodiments, in case that the request information is configured to request the first parameter information for ranging or sidelink positioning of the terminal, the second parameter information for the V2X service, and the third parameter information for the ProSe service, the PCF is configured to send, in response to the request message, the second parameter information for the V2X service, the third parameter information for the ProSe service, and the first parameter information for ranging or sidelink positioning of the terminal.

In some embodiments, the request information is information received from a terminal policy container.

It should be noted that the apparatus in the above-mentioned embodiments is merely exemplified by the division of the above-mentioned functional modules when realizing their functions. In practice, the above-mentioned function may be performed by different functional modules according to needs, i.e., the internal structure of the apparatus is divided into different functional modules to perform all or part of the functions described above. In addition, the above-mentioned apparatus according to the embodiments has the same concept as the method embodiments, and the implementation of the apparatus refer to the descriptions of the method embodiments, which will not be repeated here.

FIG. 13 illustrates a block diagram of an apparatus for parameter configuration according to an exemplary embodiment of the disclosure. Referring to FIG. 13, the apparatus includes a receiving module 1301.

The receiving module 1301 is configured to receive request information from a terminal. The request information indicates a PCF to send first parameter information, and the first parameter information is used by the terminal to perform ranging or sidelink positioning. The first parameter information is at least one of a plurality of pieces of second parameter information in a V2X service, and/or the first parameter information is at least one of a plurality of pieces of third parameter information in a ProSe service.

In some embodiments, sending the first parameter information to the terminal includes:

in case of determining that the request information is configured to request the first parameter information for ranging or sidelink positioning of the terminal and the second parameter information for the V2X service, sending, in response to the request message, the second parameter information for the V2X service and the first parameter information for ranging or sidelink positioning of the terminal.

In some embodiments, the sending the first parameter information to the terminal includes:
in case of determining that the request information is configured to request the first parameter information for ranging or sidelink positioning of the terminal and the third parameter information for the ProSe service, sending, in response to the request message, the third parameter information for the ProSe service and the first parameter information for ranging or sidelink positioning of the terminal.

In some embodiments, the sending the first parameter information to the terminal includes:
in case of determining that the request information is configured to request the first parameter information for ranging or sidelink positioning of the terminal, the second parameter information for the V2X service, and the third parameter information for the ProSe service, sending, in response to the request message, the second parameter information for the V2X service, the third parameter information for the ProSe service, and the first parameter information for ranging or sidelink positioning of the terminal.

In some embodiments, the request information is information received from a terminal policy container.

It should be noted that the apparatus in the above-mentioned embodiments is merely exemplified by the division of the above-mentioned functional modules when realizing their functions. In practice, the above-mentioned function may be performed by different functional modules according to needs, i.e., the internal structure of the apparatus is divided into different functional modules to perform all or part of the functions described above. In addition, the above-mentioned apparatus according to the embodiments has the same concept as the method embodiments, and the implementation of the apparatus refer to the descriptions of the method embodiments, which will not be repeated here.

FIG. 14 illustrates a structural diagram of a communication device according to an exemplary embodiment of the disclosure, and the communication device includes: a processor 1401, a receiver 1402, a transmitter 1403, memory 1404, and a bus 1405.

The processor 1401 includes one or more processing cores and performs various functional applications and information processing by running software programs and modules.

The receiver 1402 and the transmitter 1403 may be implemented as a communication component, which may be a communication chip.

The memory 1404 is coupled to the processor 1401 via the bus 1405.

The memory 1404 may be used to store at least one program code for execution by the processor 1401 to perform the steps in the above-described method embodiments.

Further, the communication device may be a terminal or a network device. The memory 1404 may be implemented by any type of volatile or non-volatile memory devices or their combination, including, but not limited to: a magnetic or optical disk, an electrically erasable programmable read-only memory (EEPROM), e an rasable programmable read-only memory (EPROM), a static random access memory (SRAM), a read-only memory (ROM), a magnetic memory, a flash memory, and a programmable read-only memory (PROM).

In an exemplary embodiment, a computer-readable storage medium is also provided, having stored executable program codes that are loaded and executed by a processor to implement the method for parameter configuration performed by a communication device according to the method embodiments described above.

In an exemplary embodiment, a chip is provided, where the chip includes programmable logic circuitry and/or program instructions for implementing the method for parameter configuration according to the method embodiments when the chip is running on the terminal or network device.

In an exemplary embodiment, a computer program product is provided which, when being executed by a processor of a terminal or network device, carry out the method for parameter configurations according to the method embodiments described above.

A person skilled in the art will appreciate that all or a portion of the steps for implementing the embodiments described above may be performed in hardware or performed by a program that instructs the associated hardware, and the program may be stored on a computer-readable storage medium, such as a ROM, a magnetic or optical disk.

The above description is intended to be illustrative of the disclosure and should not be taken as limiting the scope of the application, which is defined by the appended claims and their equivalents.

## Claims

1. A method for parameter configuration, performed by a terminal, the method comprising:
receiving first parameter information from a network device, wherein the first parameter information is used by the terminal to perform ranging or sidelink positioning, wherein the first parameter information is at least one of a plurality of pieces of second parameter information in a vehicle to everything (V2X) service, and/or the first parameter information is at least one of a plurality of pieces of third parameter information in a proximity services (ProSe) service.

2. The method according to claim 1, wherein the terminal has a capability to perform ranging and/or sidelink positioning; and
the terminal has a V2X capability and/or the terminal has a ProSe capability.

3. The method according to claim 1, wherein the first parameter information comprises at least one of:
dedicated parameter information for ranging or sidelink positioning;
common parameter information for both the ranging or sidelink positioning and the V2X service; or
common parameter information for both the ranging or sidelink positioning and the ProSe service.

4. The method according to claim 3, wherein direct discovery refers to that the terminal searches for another terminal via a sidelink, and for the direct discovery, the dedicated parameter information comprises parameters used for the direct discovery;
for direct communication, the direct communication refers to that the terminal communicates with another terminal via a sidelink, and the dedicated parameter information comprises at least one of:
policy/parameters for PC5 radio access technology (RAT) selection and for PC5 Transmission (Tx) Profile selection;
policy/parameters related to privacy;
policy/parameters when a long term evolution (LTE) PC5 is selected;
policy/parameters when a new radio (NR) PC5 is selected; or
an authorization policy for the ranging or sidelink positioning.

5. The method according to claim 4, wherein when the terminal is served by a next generation radio access network (NG-RAN) or served by an evolved universal terrestrial radio acccess network (E-UTRAN), the authorization policy for the ranging or sidelink positioning comprises at least one of:
for a terminal with a ranging/sidelink positioning capability, one or more public land mobile networks (PLMNs) in which the terminal is authorized to perform ranging/sidelink positioning as a reference terminal or a target terminal;
for a terminal with a ranging/sidelink positioning capability, one or more PLMNs in which the terminal is authorized to perform ranging/sidelink positioning for acquiring a relevant distance;
for a terminal with a ranging/sidelink positioning capability, one or more PLMNs in which the terminal is authorized to perform ranging/sidelink positioning for acquiring a relevant direction;
for a terminal with a ranging/sidelink positioning capability, one or more PLMNs in which the terminal is authorized to perform high accuracy ranging/sidelink positioning for acquiring a relevant distance; or
for a terminal with ranging/sidelink positioning capability, one or more PLMNs in which the terminal is authorized to perform high accuracy ranging/sidelink positioning for acquiring a relevant direction.

6. The method according to claim 4, wherein when the terminal is not served by a next generation radio access network (NG-RAN) and not served by an evolved universal terrestrial radio acccess network (E-UTRAN), the authorization policy for the ranging or sidelink positioning comprises at least one of:
for a terminal with a ranging/sidelink positioning capability, whether the terminal is authorized to perform ranging/sidelink positioning as a reference terminal or a target terminal;
for a terminal with a ranging/sidelink positioning capability, whether the terminal is authorized to perform ranging/sidelink positioning for acquiring a relevant distance;
for a terminal with a ranging/sidelink positioning capability, whether the terminal is authorized to perform ranging/sidelink positioning for acquiring a relevant direction;
for a terminal with a ranging/sidelink positioning capability, whether the terminal is authorized to perform high accuracy ranging/sidelink positioning for acquiring a relevant distance; or
for a terminal with a ranging/sidelink positioning capability, whether the terminal is authorized to perform high accuracy ranging/sidelink positioning for acquiring a relevant direction.

7. The method according to claim 3, wherein direct discovery refers to that the terminal searches for another terminal via a sidelink, and for the direct discovery, the common parameter information comprises at least one of:
an authorization policy;
radio parameters when the terminal is not served by a next generation radio access network (NG-RAN);
a restricted ProSe discovery terminal identifier (ID) for restricted direct discovery;
group member discovery parameters; or
a validity timer indicating an expiration time of the first parameter information.

8. The method according to claim 3, wherein direct communication refers to that the terminal communicates with another terminal, and for the direct communication, the common parameter information comprises at least one of:
an authorization policy;
groupcast mode 5G ProSe direct communication policy/parameters; or
radio parameters when the terminal is not served by an evolved universal terrestrial radio acccess network (E-UTRA) or not served by a new radio (NR).

9. The method according to claim 1, wherein the network device is a policy control function (PCF), and the method further comprises:
sending request information to the PCF, wherein the request information indicates the PCF to send the first parameter information.

10. The method according to claim 9, wherein sending the request information to the PCF comprises:
sending the request information to the network device in case that the terminal supports ranging or sidelink positioning for the V2X service; or
sending the request information to the network device in case that the terminal supports ranging or sidelink positioning for a first service or a second service, wherein a service type of the first service is different from a service type of the second service.

11. The method according to claim 9 or 10, wherein the request information is terminal policy request information, or registration request information.

12. The method according to any one of claims 9 to 11, wherein in case that the request information is configured to request the first parameter information for ranging or sidelink positioning of the terminal and the second parameter information for the V2X service, the PCF is configured to send, in response to the request message, the second parameter information for the V2X service and the first parameter information for ranging or sidelink positioning of the terminal.

13. The method according to any one of claims 9 to 11, wherein in case that the request information is configured to request the first parameter information for ranging or sidelink positioning of the terminal and the third parameter information for the ProSe service, the PCF is configured to send, in response to the request message, the third parameter information for the ProSe service and the first parameter information for ranging or sidelink positioning of the terminal.

14. The method according to any one of claims 9 to 11, wherein in case that the request information is configured to request the first parameter information for ranging or sidelink positioning of the terminal, the second parameter information for the V2X service, and the third parameter information for the ProSe service, the PCF is configured to send, in response to the request message, the second parameter information for the V2X service, the third parameter information for the ProSe service, and the first parameter information for ranging or sidelink positioning of the terminal.

15. The method according to any one of claims 11 to 14, wherein the request information is information received from a terminal policy container.

16. The method according to any one of claims 1 to 15, further comprising:
performing ranging or sidelink positioning according to the first parameter information.

17. A method for parameter configuration, performed by a network device, the method comprising:
sending first parameter information to a terminal, wherein the first parameter information is used by the terminal to perform ranging or sidelink positioning, the first parameter information is at least one of a plurality of pieces of second parameter information in a vehicle to everything (V2X) service, and/or the first parameter information is at least one of a plurality of pieces of third parameter information in a proximity services (ProSe) service.

18. The method according to claim 17, wherein the terminal has a capability to perform ranging and/or sidelink positioning; and
the terminal has a V2X capability and/or the terminal has a ProSe capability.

19. The method according to claim 18, wherein the first parameter information comprises at least one of:
dedicated parameter information for ranging or sidelink positioning;
common parameter information for both the ranging or sidelink positioning and the V2X service; or
common parameter information for both the ranging or sidelink positioning and the ProSe service.

20. The method according to claim 19, wherein direct discovery refers to that the terminal searches for another terminal via a sidelink, and for the direct discovery, the dedicated parameter information comprises parameters used for the direct discovery;
for direct communication, the direct communication refers to that the terminal communicates with another terminal via a sidelink, and the dedicated parameter information comprises at least one of:
policy/parameters for PC5 radio access technology (RAT) selection and for PC5 Transmission (Tx) Profile selection;
policy/parameters related to privacy;
policy/parameters when a long term evolution (LTE) PC5 is selected;
policy/parameters when a new radio (NR) PC5 is selected; and
an authorization policy for the ranging or sidelink positioning.

21. The method according to claim 20, wherein when the terminal is served by a next generation radio access network (NG-RAN) or served by an evolved universal terrestrial radio acccess network (E-UTRAN), the authorization policy for the ranging or sidelink positioning comprises at least one of:
for a terminal with a ranging/sidelink positioning capability, one or more public land mobile networks (PLMNs) in which the terminal is authorized to perform ranging/sidelink positioning as a reference terminal or a target terminal;
for a terminal with a ranging/sidelink positioning capability, one or more PLMNs in which the terminal is authorized to perform ranging/sidelink positioning for acquiring a relevant distance;
for a terminal with a ranging/sidelink positioning capability, one or more PLMNs in which the terminal is authorized to perform ranging/sidelink positioning for acquiring a relevant direction;
for a terminal with a ranging/sidelink positioning capability, one or more PLMNs in which the terminal is authorized to perform high accuracy ranging/sidelink positioning for acquiring a relevant distance; or
for a terminal with ranging/sidelink positioning capability, one or more PLMNs in which the terminal is authorized to perform high accuracy ranging/sidelink positioning for acquiring a relevant direction.

22. The method according to claim 20, wherein when the terminal is not served by a next generation radio access network (NG-RAN) and not served by an evolved universal terrestrial radio acccess network (E-UTRAN), the authorization policy for the ranging or sidelink positioning comprises at least one of:
for a terminal with a ranging/sidelink positioning capability, whether the terminal is authorized to perform ranging/sidelink positioning as a reference terminal or a target terminal;
for a terminal with a ranging/sidelink positioning capability, whether the terminal is authorized to perform ranging/sidelink positioning for acquiring a relevant distance;
for a terminal with a ranging/sidelink positioning capability, whether the terminal is authorized to perform ranging/sidelink positioning for acquiring a relevant direction;
for a terminal with a ranging/sidelink positioning capability, whether the terminal is authorized to perform high accuracy ranging/sidelink positioning for acquiring a relevant distance; or
for a terminal with a ranging/sidelink positioning capability, whether the terminal is authorized to perform high accuracy ranging/sidelink positioning for acquiring a relevant direction.

23. The method according to claim 19, wherein direct discovery refers to that the terminal searchs for another terminal via a sidelink, and for direct discovery, the common parameter information comprises at least one of:
an authorization policy;
radio parameters when the terminal is not served by a next generation radio access network (NG-RAN);
a restricted ProSe discovery terminal identifier (ID) for restricted direct discovery;
group member discovery parameters; or
a validity timer indicating an expiration time of the first parameter information.

24. The method according to claim 19, wherein direct communication refers to that the terminal communicates with another terminal, and for the direct communication, the common parameter information comprises at least one of:
an authorization policy;
groupcast mode 5G ProSe direct communication policy/parameters; or
radio parameters when the terminal is not served by an evolved universal terrestrial radio acccess network (E-UTRA) or not served by a new radio (NR).

25. The method according to claim 17, wherein the network device is a policy control function (PCF), and the method further comprises:
receiving, by the PCF, request information from the terminal, wherein the request information indicates the PCF to send the first parameter information.

26. The method according to claim 25, wherein the request information is sent in case that the terminal supports ranging or sidelink positioning for the V2X service; or
the request information is sent in case that the terminal supports ranging or sidelink positioning for a first service or a second service, wherein a service type of the first service is different from a service type of the second service.

27. The method according to claim 25 or 26, wherein the request information is terminal policy request information, or registration request information.

28. The method according to any one of claims 25 to 27, wherein sending the first parameter information to the terminal comprises:
in case of determining that the request information is configured to request the first parameter information for ranging or sidelink positioning of the terminal and the second parameter information for the V2X service, sending, in response to the request message, the second parameter information for the V2X service and the first parameter information for ranging or sidelink positioning of the terminal.

29. The method according to any one of claims 25 to 27, wherein sending the first parameter information to the terminal comprises:
in case of determining that the request information is configured to request the first parameter information for ranging or sidelink positioning of the terminal and the third parameter information for the ProSe service, sending, in response to the request message, the third parameter information for the ProSe service and the first parameter information for ranging or sidelink positioning of the terminal.

30. The method according to any one of claims 25 to 27, wherein sending the first parameter information to the terminal comprises:
in case of determining that the request information is configured to request the first parameter information for ranging or sidelink positioning of the terminal, the second parameter information for the V2X service, and the third parameter information for the ProSe service, sending, in response to the request message, the second parameter information for the V2X service, the third parameter information for the ProSe service, and the first parameter information for ranging or sidelink positioning of the terminal.

31. The method according to any one of claims 25 to 30, wherein the request information is information received from a terminal policy container.

32. A method for parameter configuration, applied to a terminal, the method comprising:
sending request information to a policy control function (PCF), wherein the request information indicates the PCF to send first parameter information, and the first parameter information is used by the terminal to perform ranging or sidelink positioning, wherein the first parameter information is at least one of a plurality of pieces of second parameter information in a vehicle to everything (V2X) service, and/or the first parameter information is at least one of a plurality of pieces of third parameter information in a proximity services (ProSe) service.

33. The method according to claim 32, wherein in case that the request information is configured to request the first parameter information for ranging or sidelink positioning of the terminal and the second parameter information for the V2X service, the PCF is configured to send, in response to the request message, the second parameter information for the V2X service and the first parameter information for ranging or sidelink positioning of the terminal.

34. The method according to claim 32, wherein in case that the request information is configured to request the first parameter information for ranging or sidelink positioning of the terminal and the third parameter information for the ProSe service, the PCF is configured to send, in response to the request message, the third parameter information for the ProSe service and the first parameter information for ranging or sidelink positioning of the terminal.

35. The method according to claim 32, wherein in case that the request information is configured to request the first parameter information for ranging or sidelink positioning of the terminal, the second parameter information for the V2X service, and the third parameter information for the ProSe service, the PCF is configured to send, in response to the request message, the second parameter information for the V2X service, the third parameter information for the ProSe service, and the first parameter information for ranging or sidelink positioning of the terminal.

36. The method according to any one of claims 32 to 35, wherein the request information is information received from a terminal policy container.

37. A method for parameter configuration, performed by a policy control function (PCF), the method comprising:
receiving request information from a terminal, wherein the request information indicates the PCF to send first parameter information, and the first parameter information is used by the terminal to perform ranging or sidelink positioning, wherein the first parameter information is at least one of a plurality of pieces of second parameter information in a vehicle to everything (V2X) service, and/or the first parameter information is at least one of a plurality of pieces of third parameter information in a proximity services (ProSe) service.

38. The method according to claim 37, wherein sending the first parameter information to the terminal comprises:
in case of determining that the request information is configured to request the first parameter information for ranging or sidelink positioning of the terminal and the second parameter information for the V2X service, sending, in response to the request message, the second parameter information for the V2X service and the first parameter information for ranging or sidelink positioning of the terminal.

39. The method according to claim 37, wherein sending the first parameter information to the terminal comprises:
in case of determining that the request information is configured to request the first parameter information for ranging or sidelink positioning of the terminal and the third parameter information for the ProSe service, sending, in response to the request message, the third parameter information for the ProSe service and the first parameter information for ranging or sidelink positioning of the terminal.

40. The method according to claim 37, wherein sending the first parameter information to the terminal comprises:
in case of determining that the request information is configured to request the first parameter information for ranging or sidelink positioning of the terminal, the second parameter information for the V2X service, and the third parameter information for the ProSe service, sending, in response to the request message, the second parameter information for the V2X service, the third parameter information for the ProSe service, and the first parameter information for ranging or sidelink positioning of the terminal.

41. The method according to any one of claims 37 to 40, wherein the request information is information received from a terminal policy container.

42. An apparatus for parameter configuration, comprising:
a receiving module, configured to receive first parameter information from a network device, wherein the first parameter information is used by a terminal to perform ranging or sidelink positioning, wherein the first parameter information is at least one of a plurality of pieces of second parameter information in a vehicle to everything (V2X) service, and/or the first parameter information is at least one of a plurality of pieces of third parameter information in a proximity services (ProSe) service.

43. An apparatus for parameter configuration, comprising:
a sending module, configured to send first parameter information to a terminal, wherein the first parameter information is used by the terminal to perform ranging or sidelink positioning, the first parameter information is at least one of a plurality of pieces of second parameter information in a vehicle to everything (V2X) service, and/or the first parameter information is at least one of a plurality of pieces of third parameter information in a proximity services (ProSe) service.

44. An apparatus for parameter configuration, comprising:
a sending module, configured to send request information to a policy control function (PCF), wherein the request information indicates the PCF to send first parameter information, and the first parameter information is used by a terminal to perform ranging or sidelink positioning, wherein the first parameter information is at least one of a plurality of pieces of second parameter information in a vehicle to everything (V2X) service, and/or the first parameter information is at least one of a plurality of pieces of third parameter information in a proximity services (ProSe) service.

45. An apparatus for parameter configuration, comprising:
a receiving module, configured to receive request information from a terminal, wherein the request information indicates a policy control function (PCF) to send first parameter information, and the first parameter information is used by the terminal to perform ranging or sidelink positioning, wherein the first parameter information is at least one of a plurality of pieces of second parameter information in a vehicle to everything (V2X) service, and/or the first parameter information is at least one of a plurality of pieces of third parameter information in a proximity services (ProSe) service.

46. A terminal, comprising:
a processor; and
a transceiver coupled to the processor;
wherein the processor is configured to load and execute executable instructions to implement the method for parameter configuration according to any one of claims 1 to 16, or the method for parameter configuration according to any one of claims 32 to 36.

47. A network device, comprising:
a processor; and
a transceiver coupled to the processor;
wherein the processor is configured to load and execute executable instructions to implement the method for parameter configuration according to any one of claims 17 to 31, or the method for parameter configuration according to any one of claims 37 to 41.

48. A computer-readable storage medium having executable program codes stored thereon which, when loaded and executed by a processor, implement the method for parameter configuration according to any one of claims 1 to 41.

49. A computer program product which, when executed by a processor of a terminal or network device, implements the method for parameter configuration according to any one of claims 1 to 41.
